# EUROPEAN PATENT APPLICATION

(11) **EP 2 444 819 A1**
(43) Date of publication of application: **25.04.2012**
(21) Application number: 11185622.5
(22) Date of filing: 18.10.2011
(51) Int. Cl.: G01S 7/52, G01S 15/93

(54) **Vehicle parking aid**

(30) Priority: 21.10.2010 GB 1017739
(71) Applicant: Nissan Motor Manufacturing (UK) Ltd., Cranfield Bedfordshire MK43 0DB (GB)
(72) Inventor: Savage, Neil, Cranfield, Bedfordshire MK430DB (GB); Burndred, Luke, Cranfield, Bedfordshire MK430DB (GB)

(57) **Abstract**

A parking aid apparatus (120, Fig. 2) is provided for a vehicle, the apparatus having a parking aid controller (126, Fig. 2) in communication with at least two proximity sensors (2b, 2d), wherein the parking aid controller (126) is arranged so as to be calibrated for a given vehicle variant (1 s) by placing configuration targets (202a, 202c) within the sensing range of a pre-determined number of said proximity sensors (2a, 2c, Fig. 1b) when the apparatus (120) is operating in a configuration mode. The parking aid apparatus is arranged to accept the number and position of configuration targets (202a, 202c) sensed by said proximity sensors as an input to the parking aid controller (126) indicative of the desired calibration to be used. The configuration setting selected in a configuration mode is maintained and/or locked in a normal mode. A parking aid calibration apparatus 300 is also disclosed.

## Description

### Field of the invention.

The invention is concerned with a parking aid apparatus for a vehicle and particularly, but not exclusively to a parking aid apparatus which may be configured for use with one of a number of different vehicle variants. Aspects of the invention relate to an apparatus, to a method, to a vehicle, and to a calibration apparatus.

### Background of the invention.

Vehicle integrated parking aids are becoming increasingly popular in passenger and commercial vehicles. Typically, a vehicle parking aid comprises a parking aid control unit located within the vehicle and at least one ultrasonic transducer arranged to monitor the distance between an outer surface of the vehicle, such as a vehicle bumper, and an external obstacle. It is common practice to use multiple ultrasonic transducers arranged in an array along a suitable exterior surface of a vehicle, such as the front and/or rear bumper. Each ultrasonic transducer operates as a transceiver, emitting pulses and detecting pulses reflected back by surfaces of an external object. Each transceiver is connected electrically to a control unit arranged to determine the approximate distance between the transceiver and said external object by measuring the time of flight of the ultrasonic pulse. This time of flight is proportional to the distance to the obstacle, and as such may be used to generate an appropriate warning to the vehicle driver as the vehicle approaches a detected object.

In order for the parking aid apparatus to function reliably, the control unit parameters must be tuned to suit the vehicle variant to which the apparatus is fitted. The physical layout of the transducers, the bumper structure, and even a tow bar - if fitted - can significantly affect the response and performance of the apparatus in use.

At present, the most common way to provide a parking aid as an optional feature on a vehicle is to use a stand-alone system. Stand-alone systems are not integrated into the vehicle infrastructure, other than to be provided with electrical power - they are not able to communicate with the other electrical systems on the vehicle, as they are not connected to a vehicle data-bus. Without the ability to communicate electrically with other vehicle systems, the stand-alone parking aid cannot be configured to the vehicle once it has been installed thereto. It must therefore be configured before it reaches the vehicle assembly line. In the case of some known stand-alone systems, the parking aid apparatus is powered directly from the reversing light circuit. In this way, the complexity of the vehicle wiring harness is minimised, and there is no need for a separate control switch. Instead, the parking aid is activated whenever the reversing lights are energised.

In the case of a stand-alone parking aid system, the control unit must either be provided with a general configuration suitable for a selection of similarly shaped vehicles, or configured specifically for a particular vehicle. Use of a general configuration limits the performance of the parking aid system, and may lead to customer dissatisfaction. Use of a dedicated, specific configuration optimises system performance for a given vehicle; but the relatively small build volumes of each configuration adversely affect costs.

Some vehicle manufacturers use stand-alone parking aid systems with a dedicated configuration for the vehicle to which they are to be fitted. This greatly increases parts complexity, requiring a separate part number to be allocated to parking aid systems for a given vehicle variant or model, as each parking aid system must be optimised for the intended vehicle. Care must be taken not to inadvertently mix parking aid systems and vehicles, as even though the control unit hardware is common, the configuration may be entirely different.

More complex parking aid systems have a control unit provided with a communications link to the vehicle Controlled Area Network or CANbus; thus integrating the parking aid, or at least its control unit, into the vehicle communications network. Such parking aids, known as integrated parking aid systems, may thus be configured with a pre-determined vehicle profile calibration during vehicle assembly via the vehicle CANbus. However, such systems are far more complicated and thus more expensive than the stand-alone parking aid systems described above.

It is an aim of the present invention to address one or more of these known problems. Embodiments of the invention may provide a parking aid controller and a method and apparatus for calibrating said controller once it has been assembled onto a vehicle.

In addition, the present invention offers a reduction in parts complexity compared to known systems. Aspects and embodiments of the invention may provide a parking aid apparatus for a vehicle and a method of communicating with, and thus calibrating, the apparatus directly, without a data connection between the apparatus and the vehicle. This approach greatly improves the performance of the parking aid apparatus whilst reducing parts complexity and associated costs. Other aims and advantages of the invention will become apparent from the following description, claims and drawings.

### Summary of the invention.

Aspects of the invention therefore provide an apparatus, a method, a vehicle, and a calibration apparatus as claimed in the appended claims.

According to the present invention, there is provided a parking aid apparatus for a vehicle, comprising a memory unit, sensing means in the form of at least one sensor, and control means in communication with the sensing means, wherein the control means is arranged to operate in a configuration mode and in a normal mode and, when operating in the configuration mode, to select one of a plurality of configuration settings stored in the memory unit in dependence on an input received by the control means from the sensing means, characterized in that the control means is arranged to lock the configuration setting selected during operation in the configuration mode upon switching from the configuration mode to the normal mode.

Advantageously, the present invention combines the performance of an integrated parking aid system with the simplicity, ease of assembly onto the vehicle, and attendant low cost of a basic stand-alone parking aid.

In an embodiment, the sensing means comprises at least one transceiver, arranged in use to emit and to receive a signal for reflecting off the surface of an object within sensing range of the transceiver. The control means may be arranged to determine the position of the object relative to the vehicle in dependence on the input from the transceiver(s).

In an embodiment, the sensing means comprises at least one transducer; and in the configuration mode, the control means is arranged to select the configuration setting in dependence on the proximity of an object detected by the sensor means.

In an embodiment, the sensor means comprises at least two transducers and in the configuration mode, the control means is arranged to select the configuration setting in dependence on which of the at least two transducers detects an object within sensing range thereof.

In an embodiment, the sensing means comprises an optical device such as a video camera. The control means may be arranged in use to recognise the optical signature of an object within sensing range and to determine its position relative to the vehicle.

According to another aspect of the present invention for which protection is sought, there is provided a vehicle comprising a parking aid apparatus as claimed in any preceding paragraph.

According to a further aspect of the present invention for which protection is sought, there is provided a method for configuring a parking aid apparatus for a vehicle, said apparatus comprising at least one sensor, the method comprising: activating a configuration mode of the parking aid apparatus; selectively placing one or more targets within sensing range of the at least one sensor; selecting a specific configuration in response to the detection of the one or more targets by the at least one sensor; and switching from the configuration mode of the parking aid apparatus to a normal mode; characterized in that: selecting the specific configuration comprises selecting a configuration from a memory in dependence on the number and/or position of targets detected by the at least one sensor whilst operating in the configuration mode.

According to a yet further aspect of the present invention for which protection is sought, there is provided a method for configuring a parking aid apparatus for a vehicle as described in the preceding paragraphs, said apparatus comprising: a control means having a processor and a memory; and sensing means, said method comprising the steps: installing the control means and sensing means into said vehicle; electrically connecting the sensing means to the control means; activating a configuration mode within the control means; and selectively placing configuration targets within sensing range of the sensing means, wherein a specific configuration is selected from the memory by the control means in response to the input received from the sensing means in dependence upon the number and/or position of configuration targets detected by the sensing means whilst operating in the configuration mode.

In an embodiment, the method comprises the control means adopting, for example permanently adopting, said specific configuration upon de-activation of the configuration mode.

According to a still further aspect of the present invention for which protection is sought, there is provided a vehicle comprising a parking aid apparatus as described in one or more of the above paragraphs.

According to a yet further aspect of the present invention for which protection is sought, there is provided a vehicle comprising a parking aid apparatus calibrated for said vehicle using the method described in one or more of the preceding paragraphs.

According to another aspect of the present invention for which protection is sought, there is provided a parking aid calibration device arranged to present configuration targets in a pre-determined position within the sensing range of a parking aid apparatus, wherein the calibration device comprises a calibration bay for accommodating the parking aid apparatus to be calibrated, a plurality of movable configuration targets, sensing means, control means and a user interface, wherein the control means is arranged to move selected calibration targets into sensing range of pre-determined parking aid sensor(s) in response to the output from the user interface and/or the sensing means, said output being indicative of the desired configuration of the parking aid.

According to a further aspect of the present invention for which protection is sought, there is provided a parking aid calibration apparatus comprising: a calibration bay or area for accommodating the parking aid apparatus to be calibrated; a plurality of movable targets; and means for configuring said targets in one of a plurality of predetermined positions within the sensing range of the parking aid apparatus.

The calibration apparatus may comprise control means arranged to move one or more of said targets into said predetermined positions according to a desired configuration.

The control means may determine the desired configuration in dependence on at least one signal received from a user-operated interface.

The control means may determine the desired configuration in dependence on at least one signal received from sensing means arranged to identify the type of vehicle to which the parking aid apparatus is fitted.

The calibration bay may be adapted to support the vehicle in a stationary condition, so that the parking aid sensing means is held in a fixed location and orientation relative to the calibration targets.

The parking aid calibration device and apparatus described above could also be regarded as a parking aid configuration device and apparatus respectively.

Within the scope of this application it is envisaged that the various aspects, embodiments, examples, features and alternatives set out in the preceding paragraphs, in the claims and/or in the following description and drawings may be taken independently or in any combination thereof. In particular, features described in connection with one embodiment are applicable to the other embodiments, except where there is an incompatibility of features.

### Brief Description of the Drawings

The present invention will now be described, by way of example only, with reference to the accompanying drawings in which:

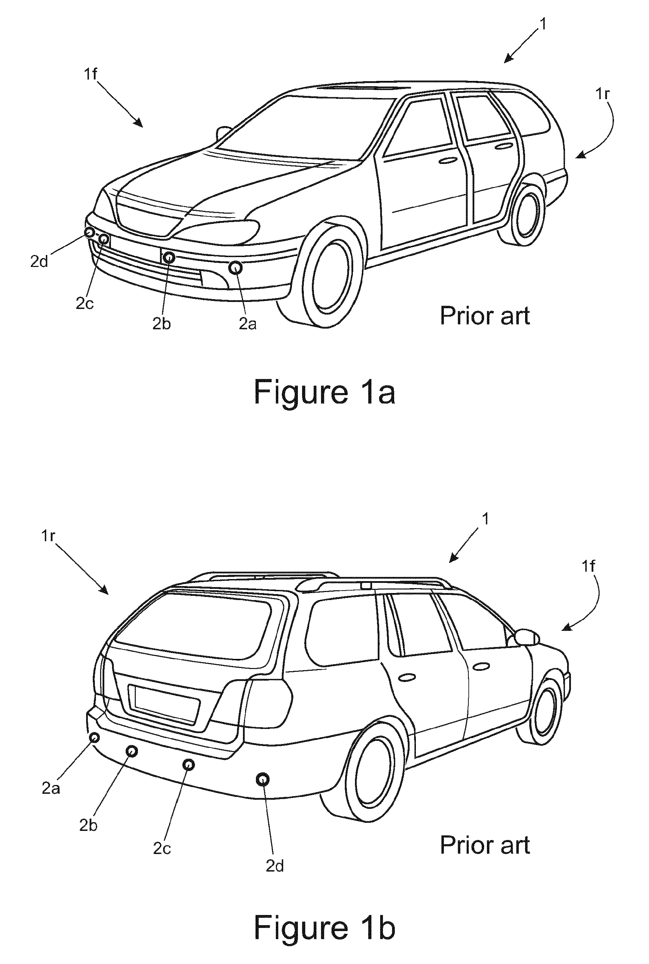

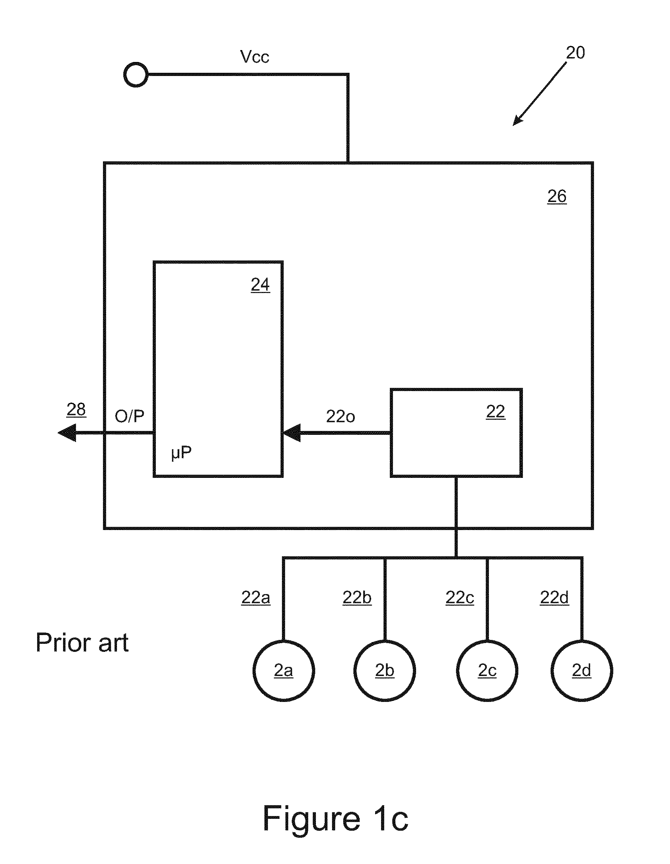

Figures 1 a and 1 b show views of a vehicle fitted with a known parking aid;
Figure 1 c shows a schematic view of a known parking aid apparatus for a vehicle;
Figure 2 shows a schematic view of an example of a parking aid apparatus of the present invention;
Figures 3a, 3b and 3c illustrate a parking aid calibration device embodying one form of the invention for use with a parking aid apparatus embodying another form of the invention; and
Figures 4a and 4b show two examples of look-up tables for a parking aid apparatus embodying one form of the present invention for configuring said apparatus once it has been fitted to a vehicle.

While the examples given for suitable applications for the present invention relate to a parking aid apparatus for passenger vehicles, it will be appreciated by one skilled in the art that there are potentially other uses for the present invention with vehicles or other moving devices not intended for carrying passengers, such as trucks or other such commercial vehicles.

Figures 1 a and 1 b show views of a typical passenger vehicle 1 fitted with a known parking aid. Figure 1 a shows a front perspective view and Figure 1 b shows a rear perspective view of the vehicle 1, respectively. The known parking aid fitted to the vehicle 1 comprises a parking aid controller 26 (see Figure 1c) and an array of transducers 2a-2d. The parking aid controller 26 is typically mounted within the vehicle and is therefore not shown in Figures 1 a and 1 b. Typically, the transducers 2a-2d comprise ultrasonic transceivers, which are mounted on a suitable external surface of the vehicle such as the front or rear bumper.

In the example shown in Figure 1a, the front 1f of the vehicle 1 is provided with a front bumper having four ultrasonic transceivers, 2a-2d mounted on the far left, mid left, mid right and far right of the vehicle bumper respectively. These transceivers 2a-2d are positioned on the bumper close to the periphery of the vehicle 1, increasing the likelihood of obstacle detection during parking manoeuvres to mitigate the risk of collision.

Similarly, Figure 1 b shows the rear 1r of the vehicle 1, provided with a rear bumper with four ultrasonic transceivers, 2a, 2b, 2c and 2d, mounted on the far left, mid left, mid right and far right of the vehicle bumper respectively. It will be appreciated by one skilled in the art that a parking aid apparatus may comprise an array of transducers provided at both the front and rear of the vehicle and that these transducers may be substantially identical in form and function. For this reason, the transducers 2a-2d have been given the same reference numerals for both front and rear arrays.

Figure 1c shows a schematic view of a known parking aid system 20, comprising control means, in the form of a parking aid controller 26, and four transducers 2a-2d. The parking aid controller 26 comprises processor means, in the form of a first microprocessor 24, and a transceiver controller, in the form of a second microprocessor 22. The transceiver controller 22 is in electrical communication with the four transducers 2a-2d via respective electrical connections 22a-22d. The parking aid system 20 is activated in response to the user selecting a reverse gear which energizes a reverse light circuit, arranged to provide a supply voltage Vcc to the parking aid system 20.

In use, the parking aid system 20 is activated when the user selects reverse gear, activating the reverse light(s) and supplying a supply voltage Vcc to the parking aid system 20. Upon activation, the transceiver controller 22 activates the transducers 2a-2d, which emit a series of acoustic pulses at ultrasonic frequencies; and detect the reflections of those pulses from objects in close proximity to the vehicle. The transceiver controller 22 receives an electrical output signal from each transducer 2a-2d via the electrical connections 22a-22d. Each signal is representative of the distance between the vehicle and a nearby object.

As the user manoeuvres the vehicle 1, the transceiver controller 22 monitors the output from each transducer 2a-2d. Where no obstacle is present around the vehicle, the time of flight of the ultrasonic pulse emitted by the transceiver, i.e. the length of time between transmission of the signal and reception of the reflected pulse, will exceed a predetermined threshold. In this case a signal 22o is sent by the transceiver controller 22 to the processor means 24. Upon receipt of this signal 22o, the control means 26 generates an output 28, indicating to the driver, typically via an audible and/or visual signal, that the path is clear to continue to reverse.

However, when one or more of the transducers 2a-2d detects an external object, the time of flight of the ultrasonic pulse falls within a pre-determined threshold and the output 28 generated by the control means 26 is indicative to the driver that the vehicle 1 is approaching an obstacle.

In the example of the known stand-alone parking aid shown in Figure 1c, the processor means 24 in the control unit 26 is provided with a general configuration suitable for a selection of similarly shaped vehicles. It will be appreciated by one skilled in the art that such a non-specific configuration may be set before assembly to the vehicle 1, but ultimately, the performance of such a configuration will be compromised when compared to a unique, vehicle specific configuration. However, if the parking aid system 20 is provided with a dedicated configuration, unique to a particular vehicle, great care will be needed to prevent inadvertently fitting it to a vehicle with a different body style. To manage this concern, each configuration must be identified by a unique part number, increasing parts complexity and attendant costs.

The present invention seeks to address these issues whilst at the same time minimising the complexity of integration into an existing vehicle. The parking aid apparatus of the present invention provides the benefit of being compatible with a plurality of vehicles without the need to communicate with the vehicle communication bus and without the attendant compromise in performance or functionality associated with known vehicle parking aid systems.

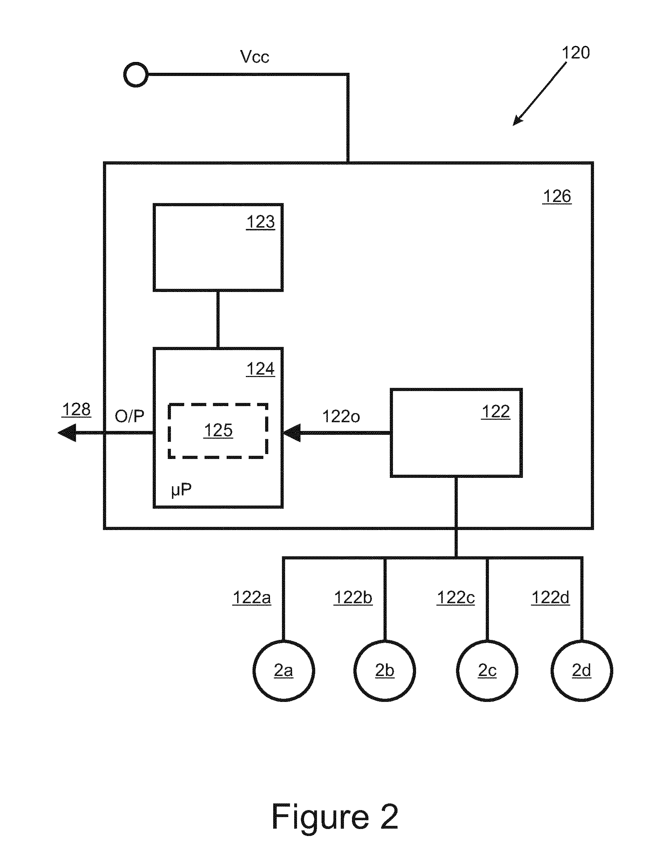

Figure 2 shows a schematic view of an example of a parking aid apparatus 120 of the present invention. The parking aid apparatus 120 comprises a parking aid controller 126 and four transducers 2a-2d. The parking aid controller 126 comprises control means, in the form of a first microprocessor 124, and a transceiver controller in the form of a second microprocessor 122. The transceiver controller 122 is in electrical communication with the four transducers 2a-2d via respective electrical connections 122a-122d. As in the case of the known parking aid system 20, shown in Figure 1c, the parking aid system 120 of the present invention is provided with a supply voltage Vcc from the reverse light circuit.

In contrast with the known parking aid system 20, the control means 124 of the present invention is connected to a memory unit 123 for storing configuration data for the parking aid apparatus 120. In addition, the control means 124 comprises an algorithm 125 which permits the parking aid apparatus 120 to operate in one of two modes, namely a normal operating mode and a configuration mode.

In normal day to day use, the user operates the parking aid apparatus 120 in the normal mode. The configuration mode may be accessed by a switch (not shown) or, in an advantageous embodiment, is activated automatically in response to the control means 124 being connected to the power supply Vcc for the first time.

It is envisaged that, in order to prevent the configuration mode from being inadvertently activated, the controller 126 and/or control means 124 may be configured to permit access to the configuration mode only after a sequence of activation and deactivation cycles are completed in a given time. This may be achieved, for example, by reverse gear being selected and de-selected 3 times within 10 seconds. It is proposed that the system is configured whilst the vehicle is in a pre-determined location or station on the vehicle assembly line or repair centre.

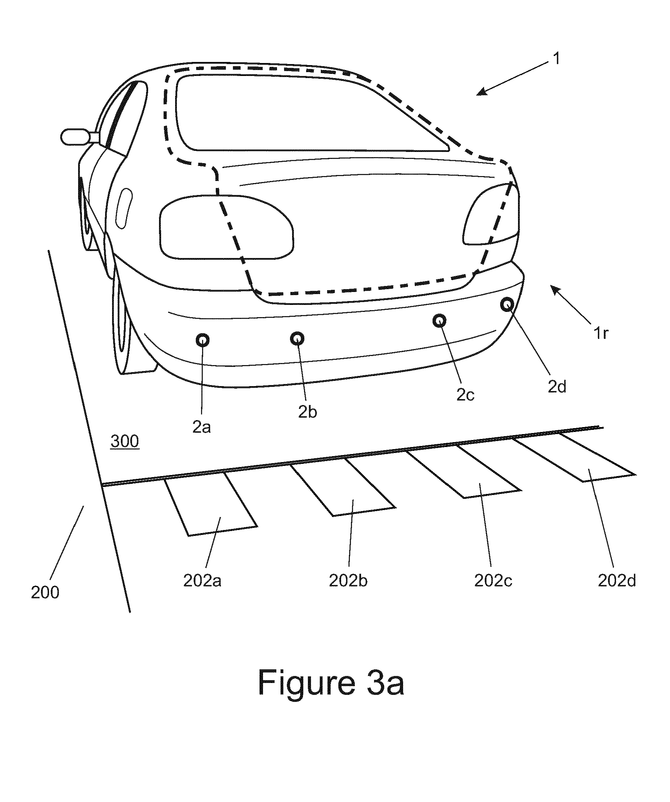

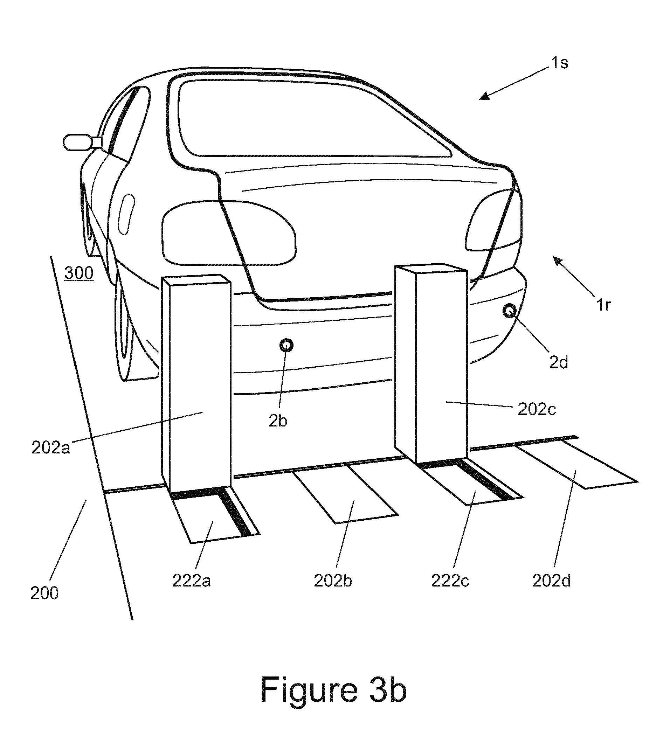

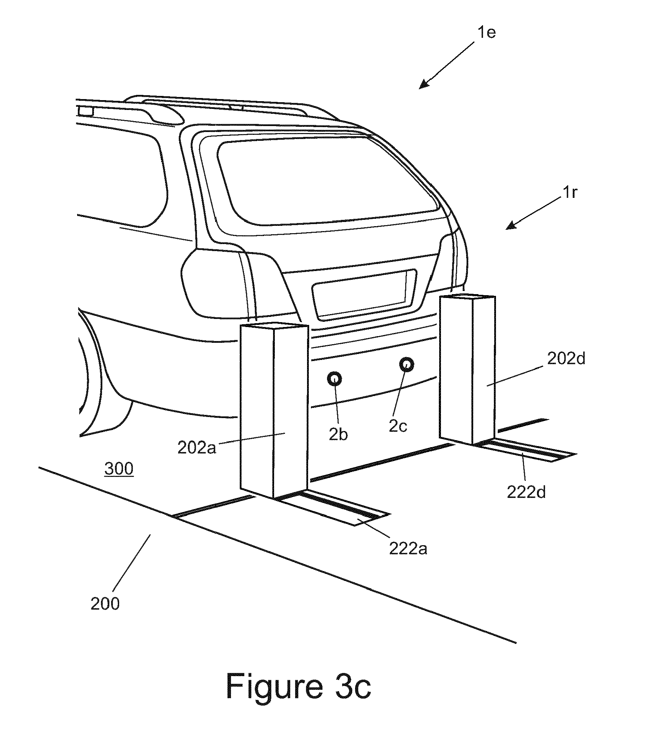

A parking aid configuration apparatus 200 has been devised to facilitate configuration of the vehicle parking aid as claimed in the present invention during vehicle assembly, and will be described shortly. In this way, the position and attitude of the vehicle is controlled by the size and shape of the parking aid configuration apparatus 200 as shown in Figure 3.

Figure 3 shows examples of a configuration apparatus, suitable for configuring the parking aid apparatus 120 of the present invention. In the examples shown, the parking aid configuration apparatus 200 comprises a station forming part of a typical vehicle assembly line.

To configure the parking aid apparatus 120 of the present invention, the vehicle assembly operator places a plurality of configuration targets within sensing range of the transducers 2a-2d and activates the configuration mode of the parking aid apparatus 120. The number, position and even the proximity of the configuration targets may be used to correspond to a specific vehicle calibration held within the memory unit 123 of the parking aid controller 126. For example, positioning a configuration target within the sensing range of the mid left target 2b may be interpreted as logic 0100 which may be transmitted as signal 122o from the transceiver controller 122 to the control means 124. Upon receipt of a signal 122o the control means 124, using the algorithm 125, checks the vehicle profiles held in the look-up table in the memory unit 123 and, upon finding a vehicle profile corresponding to the signal 122o, selects the appropriate configuration accordingly.

In this example, a plurality of configuration targets 202a-202d are provided, with one target corresponding to each of the transducers 2a-2d. The configuration targets 202a-202d take the form of a plurality of hinged flaps, pivotably mounted to the floor or other suitable structure forming a calibration bay 300. The configuration targets 202a-202d are located adjacent to the end of the vehicle on which the transducers 2a-2d are mounted. When not in use, the targets 202a-202d are arranged so as not to obstruct movement of the vehicle into or out of the station.

The targets may be mounted on a gantry (not shown) arranged to hold the targets above the vehicle when not in use and the configuration apparatus 200 may be arranged to move the targets into position when required. Alternatively, as in the example shown in Figure 3, the targets 202a-202d may lie in recesses 222a-222d (Figure 3b) when not in use, such that the targets 202a-202d lie substantially flush with the floor surface of the calibration bay 300 as shown in Figure 3a. In this way, the vehicle may be driven into and out of the calibration apparatus 200 without obstruction.

As the vehicle 1 is placed onto or into the station, the user or assembly operator may manually activate a configuration device controller (not shown) using a suitable user interface. Alternatively, the configuration apparatus 200 may be configured to sense the presence of the vehicle 1 as it enters the calibration bay 300. The user may either input the vehicle specification manually, or the configuration device 200 may be arranged to sense and identify the vehicle 1 as it enters the calibration bay 300 ― for example, by reading a bar coded label or tag attached to the vehicle. In dependence on the vehicle configuration required, the configuration device controller moves selected configuration targets 202 into a position substantially perpendicular to the floor. A target 202 is only moved into position, a pre-determined distance from the corresponding transducer 2, where the vehicle configuration code requires that the transducer 2 outputs a signal associated with detecting an object. In this way, a 4-bit code may be made up of a bit from each of the four transducers 2, so as to match the specific combination associated with the required vehicle configuration.

The configuration targets 202 may be positioned once or several times as required during configuration of the parking aid apparatus 120 in order to enter the desired input into the parking aid controller 126. The configuration targets 202 are not necessarily required at each end of the vehicle 1, as long as the configuration data related to the vehicle profile in the memory unit 123 contains information pertaining to each transducer 2 controlled by the parking aid apparatus 120.

As configuration of the parking aid apparatus 120 may be performed during vehicle assembly, at which point the exact specification of the vehicle is known, the parking aid apparatus 120 can be supplied to the vehicle assembly line as a common part with a common part number. The parking aid apparatus 120 may be configured with a vehicle specific configuration, optimising performance and negating the risk of inadvertently using an incorrectly configured parking aid controller during vehicle assembly. Configuration of the parking aid apparatus 120 is achieved without the added complexity of a connection to the vehicle data-bus, such as a CANbus, keeping product complexity and the attendant costs to a minimum.

It is envisaged that the proposed method of parking aid configuration may be performed on the vehicle assembly line, during transmission testing on a rolling road or during testing of rear light clusters; all without hindering the assembly operators or adding significant steps to their process.

It may be seen by comparing Figure 3b and Figure 3c, that the parking aid configuration device 200 places different calibration targets 202a-202d into position in dependence on the type or specification of vehicle variant driven onto the calibration bay 300.

Figure 3b shows the parking aid of a saloon or sedan style passenger car 1 s being configured using the configuration device 200. In this example, the code associated with the vehicle profile for this vehicle is a logic 1010. To enter the logic code 1010 into the parking aid, the calibration device 200 raises targets 202a and 202c into position whilst leaving targets 202b and 202d in a position in which the sensing means of the parking aid cannot detect them. In this way, the transducers 2a and 2c will give a positive response to the transceiver controller 122 associated with having determined that an object is within sensing range, similarly transceivers 2b and 2d will output a negative response as no targets were placed within sensing range for these transceivers.

Similarly, Figure 3c illustrates configuration of a parking aid apparatus fitted to an estate or station wagon style passenger car 1e. In this case, the code associated with the vehicle profile is 1001 and thus the calibration apparatus 200 raises targets 202a and 202d into position whilst leaving targets 202b and 202c in a lowered position, resting in their respective recesses 222.

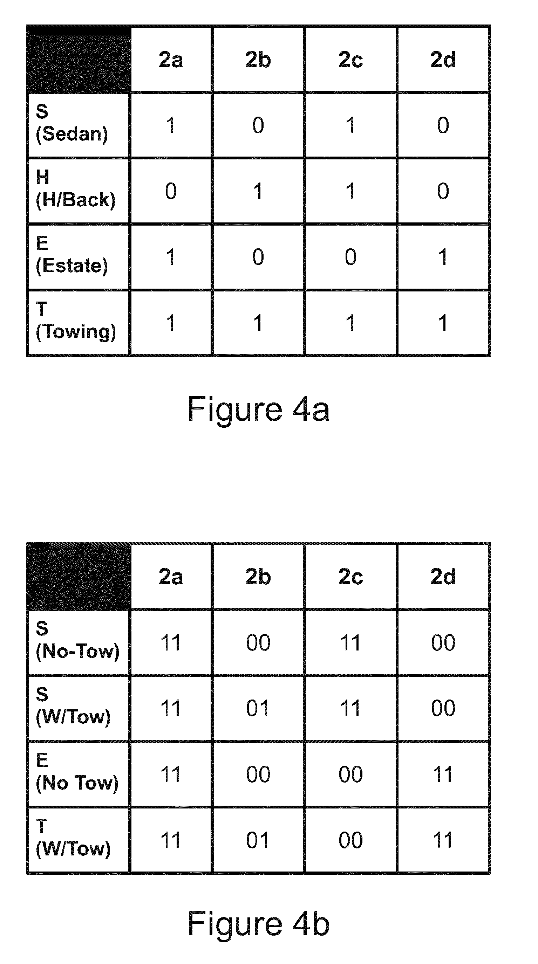

Figure 4 shows examples of vehicle profile data stored in the memory unit 123 and how the parking aid controller 126 may, with reference to this data, interpret the output from transceivers 2a-2d to select the appropriate configuration for the vehicle to which the parking aid apparatus 120 is fitted. It is envisaged that the memory unit 123 holds a simple look-up table, an example of which is shown in Figure 4. The look-up table contains configuration data for a number of vehicle profiles, potentially with sub-sets of vehicle variant data to which the parking aid apparatus 120 may be fitted.

It will be appreciated by one skilled in the art that the storage capacity of the memory unit 123 should be sufficient to store vehicle profile data for each vehicle variant or model to which the parking aid apparatus 120 may be fitted as desired. Thus, a common parking aid system may be fitted, and correctly calibrated, across vehicle variants, models or even brands.

In the example shown in Figure 4a, the signal 122o, generated by the transceiver controller 122 and transmitted to the control means 124, comprises a 4-bit code. A 4-bit code provides the parking aid apparatus with a maximum of sixteen different vehicle profiles which may be stored in the memory unit 123 of the parking aid apparatus 120.

A configuration associated with input logic 0100 may identify to the parking aid controller 126 the vehicle platform and vehicle variant into which the parking aid apparatus 120 is to be, or has been, installed. This example assumes the use of binary code, thus allowing sixteen configurations to be selected for a 4-transducer system. However, it will be appreciated by one skilled in the art that multiple ranges may be used to gain a greater resolution as required. In this way, the parking aid apparatus 120 of the present invention may be used to choose a suitable vehicle configuration from a significant list of possible vehicle profiles held in the memory unit 123.

The look-up table shown in Figure 4a represents a relatively simple 4-bit vehicle profile configuration code. In this example, there are four configurations shown for a single parking aid apparatus 120, namely: a saloon or sedan (S) vehicle body variant; a hatchback (H) variant; a station wagon or estate (E) vehicle body variant; and a towing package option variant (T). In order to configure the parking aid apparatus 120 in one of these four configurations, the configuration mode is activated and then a configuration target 202 is placed within sensing range of the transceiver 2a-2d wherever a logic 1 is called for in the look-up table. No target is placed within sensing range wherever the look-up table calls for a logic 0 for a particular transceiver 2a-2d.

Once the parking aid controller 126 recognises an input from the sensor means as a valid configuration, i.e., one that corresponds to a line in the look-up table, the control means 124 will access the appropriate configuration data held in the look-up table in the memory unit 123. This configuration data, corresponding to a specific vehicle variant, may be set by the parking aid controller after a predetermine time has elapsed, when the assembly operator inputs a specific 'set command' via a pre-determined arrangement of configuration targets 202, or when the configuration mode is deactivated.

If a greater capacity for vehicle profile configurations is required, the parking aid apparatus 120 may use a code with a greater resolution. Figure 4b shows an example of a look-up table holding configuration data accessed using an 8-bit code, facilitating an increase in available storage from sixteen to two hundred and fifty six vehicle profile configurations. In this example, the parking aid apparatus 120 is provided with sensing means capable of identifying objects in their sensing range and categorizing them in terms of their distance away from the transducer.

During configuration of a parking aid apparatus using configuration data held in the look-up table shown in Figure 4b, configuration targets 202 are placed at a variety of distances from the transducers 2a-2d. In such an apparatus, the signal transmitted from each transducer 2a-2d to the transceiver controller 122 via the electrical connections 122a-122d comprises a 2-bit code. For example, with the transducer being covered by a target, the 2-bit code may be a logic 11, a target in the mid-ground may be logic 10, a target in the far-ground of the sensor range may be logic 01 and no target is detected at all, it may be transmitted as a logic 00. In this example, the signal 122o generated by the transceiver controller 122, comprises an 8-bit code made up of the four 2-bit outputs from the transceivers 2a-2d. This 8-bit code facilitates a capacity to store up to two hundred and fifty six vehicle profile configurations.

It will be appreciated by one skilled in the art that the output from the sensing means of the parking aid apparatus 120 may have an even greater resolution than shown in the example of Figures 4a or 4b to further increase the overall functionality of the apparatus 120. Similarly, it will be appreciated that the output 122o from the transceiver controller 122 may be made up of a value proportional to the time of flight of the received ultrasonic pulse emitted from the transducer. Alternatively, the output from the transducer 2 may take the form of an analogue rather than a digital signal; and the transceiver controller 122 may be configured to produce an output 122o proportional to the signal received from each transducer 2.

It is also envisaged that the sensing means of the parking aid apparatus of the present invention may instead or additionally be provided with optical sensor means such as one or more video cameras. In this case, the output from the or each camera would be interpreted by the parking aid control means and the method of configuration may involve placing configuration targets of a specific colour and/or shape within visual range of the or each optical sensor. In this way, the algorithm used by the control means may, for example, be configured to associate a specific optical signature such as shape or a particular colour configuration target, e.g. green, with a specific vehicle profile. Similarly, the same vehicle profile fitted with an optional towing hitch assembly may be represented by a green target that is arranged to flash or move with a pre-determined frequency during configuration of the parking aid apparatus 120. In this way, the specific optical signature of the or each configuration target may be associated with a particular vehicle profile and used to configure the parking aid apparatus 120 accordingly.

Two or more sensors or transducers may be used in any of the apparati or methods described above.

Other advantages will be apparent to one skilled in the art and the present examples and embodiments are to be considered illustrative and not restrictive. The invention is not to be limited to the details given herein, but may be modified within the scope and equivalence of the appended claims.

## Claims

1. A parking aid apparatus (120) for a vehicle (1), comprising:
sensing means in the form of at least one sensor (2a, 2b, 2c, 2d);
control means (122) in communication with the sensing means; and
a memory unit (123);
wherein the control means (122) is arranged to operate in a normal mode and in a configuration mode and, when operating in the configuration mode, to select one of a plurality of configuration settings stored in the memory unit (123) in dependence on signals received by the control means (122) from the sensing means (2a, 2b, 2c, 2d);
**characterized in that**:
the control means (122) is arranged to maintain and/or lock the configuration setting selected in the configuration mode upon switching from the configuration mode to the normal mode.

2. A parking aid apparatus (120) as claimed in claim 1, wherein the sensing means comprises at least one transducer (2a, 2b, 2c, 2d), arranged in use to emit and to receive a signal for reflecting off the surface of an object (202a, 202b, 202c, 202d) within sensing range of the transducer, and wherein the control means (122) is arranged to determine the proximity of the object (202a, 202b, 202c, 202d) relative to the vehicle (1) in dependence on said signal.

3. A parking aid apparatus (120) as claimed in claim 1 or claim 2, wherein the sensor means comprises at least one transducer (2a, 2b, 2c, 2d) and wherein, in the configuration mode, the control means (122) is arranged to select the configuration setting in dependence on the proximity of an object (202a, 202b, 202c, 202d) detected by the sensor means.

4. A parking aid apparatus (120) as claimed in any preceding claim, wherein the sensor means comprises at least two transducers (2a, 2b, 2c, 2d) and wherein, in the configuration mode, the control means (122) is arranged to select the configuration setting in dependence on which of the at least two transducers (2a, 2b, 2c, 2d) detects an object (202a, 202b, 202c, 202d) within sensing range thereof.

5. A parking aid apparatus (120) as claimed in any preceding claim, wherein the sensor means (2a, 2b, 2c, 2d) comprises an optical device such as a video camera, and the control means (122) is arranged in use to recognise the optical signature of an object (202a, 202b, 202c, 202d) within sensing range and to determine its position relative to the vehicle (1).

6. A method for configuring a parking aid apparatus (120) for a vehicle (1), said apparatus comprising at least one sensor (2a, 2b, 2c, 2d), the method comprising:
activating a configuration mode of the parking aid apparatus (120);
selectively placing one or more targets (202a, 202b, 202c, 202d) within sensing range of the at least one sensor (2a, 2b, 2c, 2d);
selecting a specific configuration in response to the detection of the one or more targets (202a, 202b, 202c, 202d) by the at least one sensor (2a, 2b, 2c, 2d); and
switching from the configuration mode of the parking aid apparatus (120) to a normal mode;
**characterized in that**:
selecting the specific configuration comprises selecting a configuration from a memory (123) in dependence on the number and/or position of targets (202a, 202b, 202c, 202d) detected by the at least one sensor (2a, 2b, 2c, 2d) whilst operating in the configuration mode.

7. A method as claimed in claim 6, comprising the step of maintaining said specific configuration in said normal mode upon de-activation of the configuration mode.

8. A vehicle (1s, 1e) comprising a parking aid apparatus (120) as claimed in any of claims 1 to 5.

9. A vehicle (1 s, 1 e) adapted to use a method as claimed in claim 6 or claim 7.

10. A parking aid calibration device (200) arranged to present configuration targets (202a, 202b, 202c, 202d) in a pre-determined position within the sensing range of a parking aid apparatus (120), wherein the calibration device (200) comprises a calibration bay (300) for accommodating the parking aid apparatus (120) to be calibrated, a plurality of movable configuration targets (202a, 202b, 202c, 202d), sensing means, control means and a user interface, wherein the control means is arranged to move selected calibration targets (202a, 202b, 202c, 202d) into sensing range of pre-determined parking aid sensor(s) (2a, 2b, 2c, 2d) in response to the output from the user interface and/or the sensing means, said output being indicative of the desired configuration of the parking aid (120).

11. A parking aid calibration apparatus (200) comprising:
a calibration bay or area (300) for accommodating the parking aid apparatus (120) to be calibrated;
a plurality of movable targets (202a, 202b, 202c, 202d); and
means for configuring said targets (202a, 202b, 202c, 202d) in one of a plurality of predetermined positions within the sensing range of the parking aid apparatus (120);
and control means arranged to move one or more of said targets (202a, 202b, 202c, 202d) into said predetermined positions according to a desired configuration.

12. An apparatus (200) as claimed in claim 11, wherein the control means determines the desired configuration in dependence on at least one signal received from a user-operated interface.

13. An apparatus (200) as claimed in claim 11, wherein the control means determines the desired configuration in dependence on at least one signal received from sensing means (2a, 2b, 2c, 2d) arranged to identify the type of vehicle (1s, 1e) to which the parking aid apparatus (120) is fitted.
